# EUROPEAN PATENT APPLICATION

(11) **EP 4 737 096 A1**
(43) Date of publication of application: **06.05.2026**
(21) Application number: 24209950.5
(22) Date of filing: 30.10.2024
(51) Int. Cl.: B29C 49/78, B29C 45/76, B29C 51/46, G05B 13/04, G06F 113/22, B29C 49/48

(54) **METHOD FOR OPTIMIZING A WORKING PROCESS**

(71) Applicant: Solera-Thermoform Group SpA, Fucecchio (FI) (IT)
(72) Inventor: ALDINIO-COLBACHINI, Daciano, 36047 Montegalda (VI) (IT); SCHIAVO, Fabio, 35036 Montegrotto Terme (PD) (IT)
(74) Representative: Lunati & Mazzoni S.r.L.

(57) **Abstract**

A method for optimizing a working process implemented by a computer, the process comprising at least: a heating step of a semi-finished product; a forming step, wherein the semi-finished product is transformed into an intermediate product; a cooling step, wherein the intermediate product is transformed into a manufactured article, the method comprising an algorithm operating according to the following steps: a definition step, wherein process parameters are defined; process variables having values that vary with the variation of at least one of the process parameters; a constraint interval comprising an interval of selected values of the variables; a first selection step, wherein one of the process parameters is chosen as a selected parameter; a simulation step, subsequent to the selection step, wherein the value of the selected parameter is progressively varied within a selected interval of values of the selected parameter, and for each value of the selected parameter, the corresponding values of the variables are calculated; an acquisition step, wherein for each value of the selected parameter within the selected interval, the corresponding values of the variables are recorded, each value of the selected parameter and the corresponding values defining a set of values; the sequence of the first selection step, the simulation step, and the acquisition step being repeated for each selected parameter chosen from the process parameters; a second selection step wherein each set is selected for each selected parameter wherein the corresponding values of the variables are included within a respective constraint interval.

## Description

### METHOD FOR OPTIMIZING A WORKING PROCESS

The present invention relates to a method for optimizing a working process of the type specified in the preamble of the first claim.

The object of the present invention is a method for optimizing a working process which finds application in the field of material processing and primarily, but not exclusively, in the field of polymeric material processing.

Currently, processing techniques for semi-finished products that allow for the making of manufactured articles are known. In detail, these processing techniques may include molding methods. In these techniques, the material can be inserted into a mold and undergoes to a deformation process that allows the material to acquire the desired shape of the mold.

These techniques can be hot or cold, depending on the values of the process temperatures. For example, a hot molding process is the injection molding, wherein the material, typically polymeric, is melted and injected into the mold until its internal cavity is filled, then cooled and extracted from the mold. Another molding technique is vacuum thermoforming, wherein a sheet of polymeric material is laid on the mold by means of a vacuum. The sheet is heated by heating elements (typically lamps) and rendered malleable so that it can be deformed. The vacuum created within the mold draws the sheet towards the mold and deforms it so that it adheres to the mold until it takes the shape thereof. At the end of the forming, the manufactured article thus obtained then undergoes a controlled cooling and is extracted from the mold. The known techniques described include some significant drawbacks.

In particular, they require the control of a plurality of parameters that may conflict with each other.

This aspect makes it more complex to find sets of parameter values that allow achieving the best performance of the process, for example, in terms of time, energy consumption, and quality of the manufactured article.

In this situation, the technical task underlying the present invention is to devise a method for optimizing a working process capable of substantially overcoming at least part of the cited drawbacks.

Within said technical task, an important purpose of the invention is to obtain a method for optimizing a working process capable of optimizing the parameters of a working process.

Another important purpose of the invention is to create a method for optimizing a working process that allows reducing the duration of a working process.

The technical task and the specified purposes are achieved by a method for optimizing a working process as claimed in the appended claim 1. Preferred technical solutions are highlighted in the dependent claims.

In this document, measurements, values, shapes, and geometric references (such as perpendicularity and parallelism), when associated with words like "approximately" or other similar terms such as "about" or "substantially", are to be understood as subject to measurement errors or inaccuracies due to production and/or manufacturing errors and, above all, subject to a slight deviation from the value, measurement, shape, or geometric reference to which it is associated. For example, such terms, if associated with a value, preferably indicate a deviation not exceeding 10% of the value itself.

Moreover, when used, terms like "first", "second", "upper", "lower", "main", and "secondary" do not necessarily identify an order, priority of relation, or relative position but may simply be used to more clearly distinguish between different components.

Unless otherwise specified, as apparent from the following description, terms such as "processing", "computing", "determination", "computation", or similar refer to the action and/or processes of a computer or similar electronic computation device that manipulates and/or transforms data represented as physical quantities, such as electronic magnitudes of records of a computing system and/or memories into other data similarly represented as physical quantities within computer systems, records, or other storage, transmission, or information display devices.

The measurements and data reported in this text are to be considered, unless otherwise indicated, as performed in International Standard Atmosphere ICAO (ISO 2533:1975).

The invention comprises a method for optimizing a working process implemented by a computer. The working process may be a forming process that allows the production of a manufactured article. For example, the process may preferably be a vacuum thermoforming. Moreover, the semi-finished product may be a sheet. The process includes at least one heating step of a semi-finished product. In the heating step, the semi-finished product is heated in such a way as to reach a desired temperature. Furthermore, the heating step may allow achieving a desired thermal gradient between portions at different depths of the semi-finished product. The heating can be performed by the administration of heating energy. It may have a constant or variable value over time during the heating step. The administration of energy can be carried out by exposing the semi-finished product to infrared radiation beams emitted by infrared lamps.

The heating step may correspond to the beginning of the working process, wherein the semi-finished product is heated starting from an initial temperature.

In detail, if the semi-finished product is in polymeric material, the lamps can be infrared. In this way, the semi-finished product can be properly heated.

The working process preferably includes a forming step. In this step, the semi-finished product is transformed into an intermediate product. For example, in vacuum thermoforming, the semi-finished product can be subjected to deformations after heating. In detail, the semi-finished product can be inflated by air blowing so as to prepare the semi-finished product for forming, which occurs when the semi-finished product is brought into contact with the wall of a mold. Therefore, at least the forming step can take place inside the mold. The contact between the semi-finished product and the mold wall can be achieved by applying a vacuum inside the mold. In this way, the semi-finished product gradually deforms and adheres to the mold surface until it takes its shape, which the semi-finished product takes until the transformation into the intermediate product is completed.

The process includes a cooling step of the intermediate product. In this step, the intermediate product is cooled and transformed into a manufactured article. The cooling step can occur inside the mold.

In particular, after the production of the intermediate product, it can be cooled in a controlled manner. For example, the cooling can be carried out by cooling the mold. Furthermore, the cooling can be performed using cooling fans placed near the intermediate product. In this way, the desired mechanical and shape properties (such as shrinkage) of the manufactured article can be achieved. Additionally, controlling the temperatures during the cooling step facilitates the detachment of the manufactured article from the mold at the end of the process.

Preferably, a first surface can be defined. It is the surface corresponding to the free surface of the semi-finished product as it is not in contact with the mold wall during the forming and cooling steps. Therefore, the first surface can be exposed to the atmosphere during each step of the working process.

Furthermore, a second surface can be defined. It corresponds to the surface of the semi-finished product in contact with the mold wall during the forming and cooling steps. Therefore, the second surface can be free and exposed to heating sources during the heating step. Once the heating step is completed, the second surface can be brought into contact with the mold wall.

If the semi-finished product is a sheet, the two surfaces are mutually opposite.

Preferably, a core is defined. It corresponds to the internal portion of the semi-finished product located at the greatest distance from the first surface and the second surface. Therefore, it corresponds to the innermost portion of the semi-finished product, furthest from the external environment.

The optimization method advantageously includes an algorithm. It operates according to the following described steps.

The algorithm operates according to a definition step. In this step, process parameters are defined. They are parameters associated with the working process. For example, the process parameters may preferably include material parameters. They may correspond to the parameters of the semi-finished product associated with the properties of the semi-finished product's material. In detail, the material parameters may preferably include the material type. For instance, the material type may include the type of polymer and its structure. In particular, the material type may preferably include a semi-crystalline polymer or an amorphous polymer. Additionally, the material type may preferably include at least one selected from material density, specific heat, thermal conductivity, and glass transition temperature. These parameters allow the algorithm to set the base conditions of the simulation, since, based on the material type, other process parameters can be selected.

For instance, if the material is a semi-crystalline polymer, the material parameters may also include the crystallization temperature of the crystalline step.

The process parameters may preferably include method parameters. They may be parameters associated with the implementation of the working process. In detail, the method parameters may include one chosen from the following described parameters. For example, the method parameters may include the dimensions of the semi-finished product. Therefore, in the definition step, the dimensions of the semi-finished product, particularly its thickness, can be indicated. In fact, this parameter impacts the conditions under which the process is carried out.

The method parameters may preferably include a shape factor. The shape factor may be a parameter defined as the ratio between the thickness of the semi-finished product in a portion thereof and the thickness of the manufactured article in the corresponding portion after the forming step. For instance, the portion of interest may be the one measured by a measuring instrument. In detail, the measuring instrument may be a pyrometer. The shape factor advantageously allows optimizing the process based on the shape of the manufactured article to be obtained. Another parameter of the method can be the mold temperature. The mold temperature trend, in fact, affects the method in terms of conditions under which the semi-finished product cooling occurs. Another parameter of the method may be the delivered power. This parameter is a key parameter, as it is correlated to the overall energy consumption of the process and the cycle time.

Another parameter of the method that can be defined is the transition temperature. By transition is meant a part of the heating step wherein the average value of the delivered power is varied. Therefore, the transition temperature is the semi-finished product temperature at which the delivered power value is varied. Consequently, the transition temperature is a process parameter that affects the overall process since it allows influencing and modifying the temperature profile of the semi-finished product, depending on the established transition temperature at which it is desired to change the delivered power value.

Another parameter of the method may preferably be the termination temperature of the heating step. It corresponds to the temperature at which the heating step ends. Therefore, this parameter also allows influencing the working process since it sets a criterion for terminating the heating step. Furthermore, depending on the established termination temperature value of the heating step, different results can be obtained regarding the semi-finished product processing.

Another parameter of the method may be the duration of the heating step. It has at least one influence on the process in terms of effects on the semi-finished product processing. Another parameter of the method may be the forming step duration. This duration also impacts the overall process. In fact, a longer or shorter duration of the forming step can at least influence the final properties of the manufactured article.

Another parameter of the method may be the duration of the cooling step. This duration can also affect the properties of the manufactured article.

The process parameters may preferably include instrumental parameters. They are parameters associated with the instrumentation used to perform the working process. In detail, the instrumental parameters may preferably include at least one selected from the following described parameters. In particular, they may preferably include the geometry of the mold. In fact, the geometry of the mold, in terms of the profile shapes imparted to the semi-finished product during the forming step, affects the final properties of the obtained manufactured article. In fact, the different shapes and thicknesses in different portions of the intermediate product cause the forming process to confer different properties to different portions of the manufactured article.

Other instrumental parameters may include mold dimensions. They also affect the forming process and the final properties of the manufactured article.

Another instrumental parameter may be the maximum deliverable power. It allows adjusting the power levels based on the delivery capacities of the heating sources used.

Another instrumental parameter may be the external temperature. It can influence the process steps by favouring or hindering heat diffusion.

The process parameters may include corrective parameters. For example, they may allow performing a correction of the thermal flux during the energy delivery in the heating step.

In the definition step, process variables can preferably be defined. They may be variables having values that change as the values of at least one of the process parameters change. Therefore, they may correspond to physical quantities whose value can vary as the value of at least one of the process parameters changes.

In detail, the variables may preferably include at least one selected from the following described magnitudes.

In particular, the variables may include the temperature of the first surface. In this way, it is possible to verify the variation of the free surface of the semi-finished product. The variables may include the temperature of the second surface. The latter can allow verifying how the contact with the mold influences the heating and cooling steps of the second surface.

The variables may preferably include the temperature of the core. In this way, it is also possible to verify how the innermost portion of the semi-finished product responds.

The variables may preferably include the temperature difference between the first surface and the core. In this way, it is possible to know the temperature trends from the free surface to the core.

The variables may preferably include the temperature difference between the second surface and the core. In this way, it is possible to know the temperature trends from the surface in contact with the mold to the core.

The variables may include the duration of the heating step. It may influence the final properties of the manufactured article and productivity.

The variables may include the duration of the forming step. It may also influence the properties of the manufactured article.

The variables may preferably include the duration of the cooling step.

The variables may preferably include the total duration of the process. The total duration can also depend on the duration of the individual described process steps. The variables may preferably include the number of sub-steps into which the heating step can be divided. For example, the heating step can be divided into sub-steps characterized by different process conditions. Therefore, at the end of each heating sub-step, the conditions under which the process is carried out are modified.

The variables may preferably include the delivered power of each of the sub-steps. For example, the different heating sub-steps can be carried out under different power delivery conditions. Other variables may include the duration of the sub-steps. Additionally, other variables may preferably include the transition temperatures from one sub-step to the next one. For example, a transition temperature may correspond to a predetermined value of the temperature of the first surface, at which, during the heating step, the process conditions change, and the transition to the next sub-step occurs.

The variables may preferably include the thermal flux of the semi-finished product during the heating step. It corresponds to the heat exchanged by the semi-finished product per unit of time and unit of surface area.

The variables may preferably include the total energy delivered. It corresponds to the energy delivered throughout the entire working process. This variable allows knowing the energy consumption of the working process.

In general, these variables advantageously allow monitoring the temperature trends, the durations of the process steps, and the energy consumed by the process.

The variables may preferably include at least one selected from the following magnitudes. The variables may include the initial temperature of the semi-finished product. It corresponds to the temperature of the semi-finished product at the beginning of the process. Another variable may be the maximum temperature of the first surface at the end of the heating step. The variables may preferably include the maximum temperature of the second surface at the end of the heating step. Another variable may be the difference between the maximum temperature of the first surface and the temperature of the core. The variables may include the difference between the maximum temperature of the second surface and the temperature of the core. Another variable may be the temperature of the first surface at the end of the heating step. The variables may preferably include the temperature of the second surface at the end of the heating step. Another variable may be the temperature of the core at the end of the heating step.

The variables may include the temperature of the first surface during the cooling step.

Another variable may be the temperature of the second surface during the cooling step. The variables may include the difference between the temperature of the first surface and the temperature of the second surface during the cooling step. Another variable may be the delivered power during the heating step. The variables may include the delivered power during the cooling step. Another variable may be the difference between a first temperature of the mold and a second temperature of the mold. For example, the first temperature may be the initial temperature of the mold, and the second temperature may be the temperature of the mold at the end of the working process. Alternatively, the first temperature and the second temperature may be other reference temperatures.

In the definition step, a constraint interval can preferably be defined. It may include an interval of selected values of the variables. Therefore, in the definition step, a constraint interval can be defined for each of the process variables.

For example, the constraint interval of the temperature of the first surface may preferably include a maximum value corresponding to the maximum temperature of the first surface.

For instance, the constraint interval of the temperature of the second surface may preferably include a maximum value corresponding to the maximum temperature of the second surface. In another example, the constraint interval of the temperature of the core may preferably include a minimum value corresponding to the minimum temperature of the core.

For example, the maximum temperature of the first surface, the second surface, and the core respectively, may be a working temperature lower than the material degradation temperature. In this way, the constraint interval of this variable allows excluding from the simulation the temperature values that do not enable the working process to be correctly carried out. Additionally, the maximum temperature established as the maximum value of the constraint interval allows selecting the conditions under which the semi-finished product can be heated.

In another example, the constraint interval of the temperature during the cooling step includes a maximum value corresponding to the maximum temperature of the cooling step. For example, this limit may allow excluding from the simulation the temperature values that could be associated with deformations or shrinkage of the manufactured article.

In general, these intervals allow selecting the conditions that enable making the working process more efficient.

In the definition step, the values of each constraint interval can preferably be provided as input by a user. Therefore, the constraint interval values can advantageously be set depending on how one intends to influence and optimize the working process.

The algorithm operates according to a first selection step. It is a step wherein one of the process parameters is chosen as a selected parameter. The selected parameter is a parameter by which one intends to investigate the process conditions concerning the other process parameters. It can be chosen from any of the process parameters.

The selected parameter may include one of the material parameters, method parameters, and instrumental parameters. In general, the selected parameter can be a parameter the variation of which can have an effect on the overall working process.

The algorithm operates according to a simulation step. It can be a step following the selection step. In detail, in the simulation step, the value of the selected parameter is progressively varied within a selected interval of values of the selected parameter. The latter is an interval of values of the selected parameter. Therefore, it is an interval that is chosen based on the values of interest for the process.

The values of the selected parameter are then varied within the selected interval, and the corresponding values of the unselected parameters are calculated. Therefore, the algorithm can calculate, for each value of the selected parameter, the corresponding values of the variables.

For instance, the algorithm can exploit the relationships between the known process parameters of the working process to calculate the values of the variables for each value of the selected parameter.

In detail, the selected interval of each selected parameter can be chosen based on the width of the interval, the maximum and minimum value of the interval, and the number of acquisitions that can be distributed within the selected interval. For example, a scanning pitch of the selected interval can be set. It corresponds to the difference between two consecutive values of the selected parameter within the selected interval.

For example, if the selected parameter is the transition temperature, it can be varied within an interval between 110°C and 145°C. For instance, the scanning pitch can be 5°C, and consequently, 8 sampling are defined. For each of these sampling, all the variables are sampled.

The algorithm operates according to an acquisition step. In this step, for each value of the selected parameter in the selected interval, the corresponding values of the variables are acquired or recorded. In particular, each value of the selected parameter and the corresponding values can define a set of values. Therefore, data acquisition is performed for each value of the selected parameter. Furthermore, the values of the other parameters that were not varied during the acquisition can also be acquired. Thus, each acquisition can correspond to the acquisition of a set of values. For each acquisition made, a set of values including all the calculated variable values, parameter values, and the value of the selected parameter is recorded.

The acquisition step can then occur simultaneously with the simulation step.

At the end of the simulation and acquisition steps, as many acquired sets are recorded as the simulated values of the selected parameter.

In this way, from the acquired sets, information about the variation of the calculated values of the variables as the selected parameter varies can advantageously be obtained.

Thus, information about the process trend in response to the variation of the selected parameter can be obtained. Furthermore, through this information, it is possible to identify the conditions for optimizing the working process.

The sequence of the first selection step, the simulation step, and the acquisition step is repeated for each selected parameter chosen from the process parameters. Therefore, once the sets of values related to a selected parameter are chosen, the sequence of the described steps is repeated for another parameter, and sets of values associated with the variation of this second selected parameter are acquired. Subsequently, the sequence of the described steps can be repeated for a third selected parameter to obtain acquired sets associated with the third selected parameter, and so on. In particular, this sequence is repeated as many times as the selected parameters of interest. Therefore, the sequence can be performed for each selected parameter. In detail, in each repetition of the sequence, only one selected parameter can be varied, while the other unselected process parameters are kept fixed. The variation can therefore be carried out for each selected parameter at a time during each implementation of the sequence of the steps. Alternatively, two or more process parameters can be varied in the same sequence of the selection, simulation, and acquisition steps within their respective selected intervals. In this way, multiple combinations of the selected parameter values and the calculated variables can be obtained.

The algorithm operates according to a second selection step. In this step, each set is selected for each selected parameter wherein the corresponding values of the variables are included within a respective constraint interval.

Therefore, in this step, the sets corresponding to values of the variables that allow efficient performance of the working process are selected. For example, values that lead to an alteration of the semi-finished product, which would result in a deterioration of the quality of the final manufactured article, can be excluded.

For instance, in the second selection step, each set is preferably selected for the respective selected parameter for which the corresponding values of the variables are all included within a respective constraint interval. Therefore, an advantageous selection can be performed among all the variables simultaneously, in order to identify the conditions that may allow optimizing the working process based on the selected constraint intervals.

In the second selection step, each set is preferably selected for the respective selected parameter for which the corresponding values of the variables are at least partially included within a respective constraint interval. Therefore, an advantageous selection can be performed on some of the variables of interest.

Thus, the algorithm advantageously allows selecting sets of values of the variables by which the working process can be optimized.

The optimization method may preferably include a database. The database may preferably include the material parameters. In the definition step, the algorithm can preferably associate the corresponding values with each of the material parameters in response to the selection of the material class. Therefore, once the material and the material type are selected, the database can select the material parameters associated with the chosen material.

In general, the database may include the material parameters, method parameters, instrumental parameters, and process variables. In particular, the recorded values of the parameters in the database can also be modified or replaced by the algorithm in the acquisition step. Therefore, the acquired sets can be recorded in the database at the end of the acquisition step.

In the method, parameters to be optimized can preferably be defined. They can be chosen from among the process variables. In particular, the process parameters can be performance indices based on which the process can be optimized depending on the desired type of optimization. For example, a parameter to be optimized can be the total delivered energy. Alternatively, another example of a parameter to be optimized could be the total duration of the process.

For each of the parameters to be optimized, an optimization interval can preferably be defined. It may correspond to an interval of selected values of the corresponding parameter to be optimized.

The algorithm can preferably operate according to an optimization step. This step can be subsequent to the second selection step. In this step, those sets having the values of the parameters to be optimized simultaneously included within their respective optimization interval, are selected.

In particular, the parameters to be optimized and each optimization interval can preferably be selected in the definition step. Alternatively, they can be selected at the beginning of the optimization step.

Therefore, the optimization step advantageously allows identifying the sets that allow simultaneously optimizing the selected parameters to be optimized.

For instance, a type of optimization can be chosen that allows reducing the total delivered energy and the total duration of the process. In particular, the total energy and the total duration of the process can be chosen as the parameters to be optimized, and corresponding optimization intervals can be selected, having as maximum values one threshold value for energy and one for duration, corresponding respectively to the maximum energy consumption and the maximum process duration allowed. Consequently, in the optimization step, the algorithm can calculate the sets that allow reducing the total delivered energy and the total duration of the process below the respective threshold values.

Similar calculations can be performed with other parameters to be optimized simultaneously.

The algorithm can preferably operate according to a verification step. This step can be subsequent to the second selection step. In the verification step, sets associated with profiles of the variables over time during the working process can be acquired. In detail, sets associated with at least one selected from the following profiles can be acquired. In particular, sets can be acquired, each respectively associated with a temperature profile of the first surface as a function of time. Additionally, sets respectively associated with a temperature profile of the second surface as a function of time can be acquired. Alternatively, or additionally, sets respectively associated with an energy profile as a function of time can be acquired. In this way, it is advantageously possible to display the curves of the variables of interest in order to understand their trend over time during the working process.

In particular, the algorithm can operate according to the verification step following the optimization step. In this way, once the sets that allow optimizing the working process have been identified, it is advantageously possible to display the profiles of the variables of interest associated with the implementation modes of the working process resulting from the performed optimization.

The optimization method according to the invention achieves significant advantages.

Indeed, it allows optimizing the parameters of a working process. In fact, by performing simulations on different process parameters, it is possible to identify the conditions that allow complying with the constraints chosen based on the desired process optimization.

Another advantage of the invention is that it allows reducing the duration of a working process. In fact, it is possible to select the process duration as a constraint parameter, which can be reduced below a desired threshold. Therefore, the optimization method makes the process more productive by reducing the production times of the manufactured article.

Another advantage of the method is given by the possibility of reducing energy consumption. Indeed, through the algorithm, it is possible to identify the conditions that allow maintaining the desired properties of the manufactured article while improving the energy efficiency of the working process.

The invention is susceptible to variations within the scope of the inventive concept defined by the claims.

Within this scope, all details can be replaced with equivalent elements, and the materials, shapes, and dimensions can be any.

## Claims

1. A method for optimizing a working process implemented by a computer, said process comprising at least:
- a heating step of a semi-finished product;
- a forming step, wherein said semi-finished product is transformed into an intermediate product;
- a cooling step, wherein said intermediate product is transformed into a manufactured article,
and **characterized in that**
said method comprises an algorithm operating according to the following steps:
- a definition step, wherein the following are defined:
- process parameters associated with said process;
- process variables having values that vary with the variation of at least one of said process parameters;
- a constraint interval comprising an interval of selected values of said variables;
- a first selection step, wherein one of said process parameters is chosen as a selected parameter;
- a simulation step, subsequent to said selection step, wherein the value of said selected parameter progressively changes within a selected interval of values of said selected parameter, and for each of said values of said selected parameter, the corresponding values of said variables are calculated;
- an acquisition step, wherein for each value of said selected parameter within said selected interval, the corresponding values of said variables are recorded, each said value of said selected parameter and said corresponding values defining a set of values;
- the sequence of said first selection step, said simulation step, and said acquisition step being repeated for each selected parameter chosen from said process parameters;
- a second selection step wherein each said set is selected for each said selected parameter wherein the corresponding values of said variables are included within a respective said constraint interval.

2. The method according to claim 1, wherein the following are defined:
- a first surface corresponding to the free surface of said semi-finished product as it is not in contact with the wall of a mold, wherein said forming step and said cooling step take place;
- a second surface corresponding to the surface of said semi-finished product in contact with said wall during said forming and cooling steps;
- a core corresponding to the internal portion of said semi-finished product positioned at the greatest distance from said first surface and said second surface,
said process parameters comprising:
- material parameters corresponding to the parameters of said semi-finished product associated with the properties of the material of said semi-finished product;
- method parameters associated with the implementation of said working process;
- instrumental parameters associated with the instrumentation used to implement said working process.

3. The method according to the preceding claim, wherein said material parameters comprise the type of material and at least one selected from:
- material density;
- specific heat;
- thermal conductivity;
- glass transition temperature.

4. The method according to at least claim 2, wherein said method parameters comprise at least one selected from:
- size of said semi-finished product;
- shape factor;
- mold temperature;
- delivered power;
- transition temperature, wherein during said heating step, the average value of said delivered power is varied;
- mold temperature
- temperature at the end of said heating step corresponding to the temperature at which said heating step ends;
- duration of said heating step;
- duration of said forming step;
- duration of said cooling step.

5. The method according to claim 2, wherein said instrumental parameters comprise at least one selected from:
- the geometry of the mold;
- the size of the mold;
- the maximum deliverable power;
- environmental temperature.

6. The method according to any of the preceding claims, wherein said variables comprise at least one selected from:
- temperature of said first surface;
- temperature of said second surface;
- temperature of said core;
- difference in temperature between said first surface and said core;
- difference in temperature between said second surface and said core;
- duration of said heating step;
- duration of said forming step;
- duration of said cooling step;
- total duration of said process;
- number of sub-steps into which said heating step can be divided;
- delivered power of each of said sub-steps;
- transition temperatures from one of said sub-steps to the next corresponding to temperatures of said semi-finished product at which, during said heating step, the transition from one of said sub-steps to the next occurs;
- thermal flux of said semi-finished product during said heating step;
- total delivered energy corresponding to the energy delivered during the entire working process.

7. The method according to at least the preceding claim, wherein said variables comprise at least one selected from:
- initial temperature of said semi-finished product corresponding to the temperature of said semi-finished product at the beginning of said process;
- maximum temperature of said first surface at the end of said heating step;
- maximum temperature of said second surface at the end of said heating step;
- difference between the maximum temperature of said first surface and the temperature of said core;
- difference between the maximum temperature of said second surface and the temperature of said core;
- temperature of said first surface at the end of said heating step;
- temperature of said second surface at the end of said heating step;
- temperature of said core at the end of said heating step;
- temperature of said first surface during said cooling step;
- temperature of said second surface during said cooling step;
- difference between said temperature of said first surface and said temperature of said second surface during said cooling step;
- delivered power during said heating step;
- difference between a first temperature of said mold and a second temperature of said mold, the latter corresponding to the temperature of said mold.

8. The method according to any of the preceding claims, wherein in said second selection step, each said set is selected for said selected parameter for which the corresponding values of said variables are all included within a respective said constraint interval.

9. The method according to any of the preceding claims, wherein in said definition step, the values of said constraint interval are provided as input by a user.

10. The method according to any of the preceding claims, comprising a database, said database comprising said material parameters, in said definition step said algorithm associating with each of said material parameters the corresponding values in response to the selection of the material class.

11. The method according to claim 6, wherein:
- said constraint interval of said temperature of said first surface comprises a maximum value corresponding to the maximum temperature of said first surface;
- said constraint interval of said temperature of said second surface comprises a maximum value corresponding to the maximum temperature of said second surface;
- said constraint interval of said temperature of said core comprises a minimum value corresponding to the minimum temperature of said core;
- said constraint interval of said temperature of said cooling step comprises a maximum value corresponding to the maximum temperature of said cooling step;
- said constraint interval of said temperature of said cooling step comprises a minimum value corresponding to the minimum temperature of said cooling step.

12. The method according to any of the preceding claims, wherein parameters to be optimized are defined from among said variables, and for each of said parameters to be optimized, an optimization interval corresponding to an interval of selected values of the corresponding said parameters to be optimized is defined, and wherein said algorithm operates according to an optimization step, subsequent to said second selection step, wherein said sets, having the values of said parameters to be optimized simultaneously included within their respective said optimization interval, are selected.

13. The method according to the preceding claim, wherein said parameters to be optimized and each said optimization interval are selected in a step chosen between said definition step and said optimization step.

14. The method according to any of claims 6-7, wherein said algorithm operates according to a verification step, subsequent to said second selection step, wherein it acquires said sets associated with at least one selected from:
- a temperature profile of said first surface as a function of time;
- a temperature profile of said second surface as a function of time;
- an energy delivery profile as a function of time.

15. The method according to any of the preceding claims, wherein said process is a vacuum thermoforming and said semi-finished product is a sheet.
